# EUROPÄISCHE PATENTSCHRIFT

(11) **EP 4 150 242 B1**
(45) Veröffentlichungstag und Bekanntmachung des Hinweises auf die Patenterteilung: **04.09.2024**
(21) Anmeldenummer: 21721018.6
(22) Anmeldetag: 20.04.2021
(51) Int. Cl.: F16L 23/08

(54) **PROFILSCHELLE ZUM VERBINDEN ZWEIER ROHRFÖRMIGER KÖRPER**
PROFILE CLAMP FOR CONNECTING TWO TUBULAR BODIES
COLLIER PROFILÉ POUR RELIER DEUX CORPS TUBULAIRES

(30) Priorität: 15.05.2020 DE 102020113297
(43) Veröffentlichungstag der Anmeldung: 22.03.2023
(73) Patentinhaber: NORMA Germany GmbH, 63477 Maintal (DE)
(72) Erfinder: AKREMI, Belal, Newbury Berkshire RG19 6HW (GB); RUMBAUSKIENE, Tatjana, Newbury Berkshire RG19 6HW (GB); JAROSZ, Mateusz, Newbury Berkshire RG19 6HW (GB)
(74) Vertreter: Patentanwälte Olbricht Buchhold Keulertz
(86) Internationale Anmeldenummer: PCT/EP2021/060159
(87) Internationale Veröffentlichungsnummer: WO 2021/228505

(56) Entgegenhaltungen:
- JP-A- 2016 186 314

## Beschreibung

Die Erfindung betrifft eine Profilschelle zum Verbinden zweier rohrförmiger Körper, gemäß dem Oberbegriff von Anspruch 1.

Profilschellen werden üblicherweise dazu verwendet, zwei Rohre oder ähnliche Körper miteinander zu verbinden. Die Profilschelle weist üblicherweise ein Schellenband auf, das einen einseitig offenen Profilquerschnitt besitzt. Dieser ist dazu vorgesehen, radial von außen auf die einander berührenden Flansche gelegt zu werden. Durch einen Spannkopf oder ähnliches wird eine Verspannung in Umfangsrichtung durchgeführt, sodass die Profilschelle die beiden Enden der rohrförmigen Körper form- und kraftschlüssig zusammenhält. Derartige Profilschellen können aus einem metallischen Material gefertigt und für hohe Temperaturen geeignet sein.

Es ist üblicherweise erforderlich, die Profilschelle mit vollständig geöffnetem Spannkopf an die miteinander zu verbindenden Flansche zu führen, um den Spannkopf dann wieder zusammenzusetzen und entsprechend zu verspannen. Dies ist ein separater Arbeitsschritt und macht die Montage derartiger Profilschellen aufwändig.

EP 2 674 656 B1 zeigt etwa eine Profilschelle mit zwei einseitig voneinander trennbaren Profilhalbschalen und einem dazwischenliegenden Scharnier.

JP2016186314A zeigt ein V-Band zum Verbinden von zwei rohrförmigen Gehäusen, mit einem Kanal, dessen Öffnungsbreite grösser ist als die Umfangsrichtung des Mittelteils des Bandes zur Öffnungsbreite in jedem Zwischenabschnitt.

Aufgabe der Erfindung ist es, eine Profilschelle bereitzustellen, die einfacher zu montieren und gleichzeitig möglichst einfach zu fertigen ist.

Hauptmerkmale der Erfindung sind im kennzeichnenden Teil von Anspruch 1 angegeben. Ausgestaltungen sind Gegenstand der Ansprüche 2 bis 6.

Es wird eine Profilschelle zum Verbinden zweier rohrförmiger Körper vorgeschlagen, wobei die Profilschelle ein Schellenband mit einem radial innenseitig offenen Profilquerschnitt aufweist, wobei das Schellenband an mindestens einem Ende einen ersten Übergangsabschnitt und ein daran anschließendes, radial vorspringendes Spannelement aufweist, und wobei das Spannelement zum Verspannen der Profilschelle in Umfangsrichtung spannbar ist. Gemäß der Erfindung ist vorgesehen, dass die Breite eines Bodens des Profilquerschnitts von dem Spannelement abgewandten Ende des ersten Übergangsabschnitts zu dem Spannelement hin gleichmäßig anwächst.

Die Form der Profilschelle wird wesentlich durch das Schellenband bestimmt. Dieses könnte in einigen Ausführungsformen auch zwei Schellenabschnitte aufweisen, die gelenkig miteinander verbunden sind.

Zum Verspannen der Profilschelle in Umfangsrichtung können zwei Spannelemente vorgesehen sein, die zusammen einen Spannkopf ausbilden. Die Spannelemente können als Spannbacken oder in anderen Varianten realisiert sein. Die beiden Spannelemente müssen nicht zwangsläufig auf identische Art und Weise realisiert sein, sie müssen lediglich eine Krafteinleitung in Umfangsrichtung ermöglichen. Durch das Verspannen in Umfangsrichtung werden die beiden Spannelemente einander angenähert, sodass sich mit der Verspannung insgesamt der Umfang der Profilschelle verkleinert.

Die Profilschelle ist bevorzugt durch einen Umformprozess aus einem metallischen Material hergestellt. Das Werkstück könnte etwa ein Materialstreifen sein, der tiefgezogen und /oder umgebogen wird, um die Profilschelle oder zumindest eine Hälfte der Profilschelle zu formen. Dabei werden die Spannelemente, die ersten Übergangsabschnitte und die Schellenabschnitte als eine zusammenhängende Komponente ausgebildet. Die ersten Übergangsabschnitte sind dafür vorgesehen, einen Formübergang zwischen einem offenen Profilquerschnitt des betreffenden Schellenabschnitts und einem Spannelement zu ermöglichen.

Der Profilquerschnitt weist einen Boden auf, der den Profilquerschnitt zu einer radialen Seite hin schließt. Es ist vorstellbar, dass sich eine Symmetrieebene mittig durch den Boden erstreckt und der Profilquerschnitt der Schellenabschnitte zu dieser Symmetrieebene symmetrisch ist. Unterschiedliche Profilquerschnitte sind denkbar, die neben V-Querschnitten und U-Querschnitten auch andere umfassen können. Der Boden liegt dabei radial stets außen.

Die Besonderheit der erfindungsgemäßen Profilschelle liegt nun darin, dass die Breite des Bodens in dem ersten Übergangsabschnitt nach außen hin gleichmäßig anwächst. Weisen etwa die zu verbindenden rohrförmigen Körper jeweils einen radial nach außen liegenden Flansch auf, kann ein solcher in der Nähe des Spannkopfs leichter in die Profilschelle geführt werden. Es ist dann möglich, dass der Spannkopf zwar entspannt sein muss, allerdings nicht vollständig demontiert. Eine maximale lichte Weite in dem Schellenband wird vergrößert, ohne die äußere Form der Profilschelle zu modifizieren. Durch das vereinfachte Einbringen könnte auch gleichzeitig ein Dichtungsring oder ähnliches direkt in der Profilschelle platziert werden, sodass insgesamt die Montage deutlich erleichtert wird. Zudem kann der Materialfluss beim Umformprozess optimiert werden, da bei gleichmäßig ansteigender Breite keine abrupten Krümmungsübergänge vorliegen, die zu einer lokalen Ausdünnung oder sogar einer Bruchgefahr bei der Kaltverfestigung führen könnten. Der erste Übergangsabschnitt ist demnach verformungsgerecht gestaltet und kann die Materialeigenschaften nach dem Umformprozess verbessern.

In einer vorteilhaften Ausführungsform sinkt eine Höhe des Profilquerschnitts von dem dem Spannelement abgewandten Ende zu dem Spannelement hin kontinuierlich. Damit wird eine weitere Verbesserung bezüglich der Montage erreicht, denn der maximale lichte Abstand zwischen dem ersten Übergangsabschnitt und einem Gelenkabschnitt wird dadurch noch weiter vergrößert. Das kontinuierliche Sinken muss nicht zwangsläufig mit einem gleichmäßigen Sinken gleichzusetzen sein. Vielmehr ist ein kontinuierlicher, stetiger Übergang der Höhen der einzelnen lokalen Profilquerschnitte vorgesehen.

Bevorzugt ist der Profilquerschnitt wannenförmig und weist zwei den Boden einschließende Schenkel auf, die jeweils einen dem Boden zugewandten geradlinigen Abschnitt aufweisen, wobei die geradlinigen Abschnitte der beiden Schenkel einen ersten Winkel zueinander einschließen, der sich von dem dem Spannelement abgewandten Ende zu dem Spannelement hin kontinuierlich vergrößert. Die Wannenform wird zu einer radial außenliegenden Seite durch den Boden begrenzt. Seitlich des Bodens sind Wandflächen vorgesehen, die im Profilquerschnitt die genannten Schenkel ausbilden. Es ist vorstellbar, dass die Schenkel nicht direkt winklig an den Boden anschließen, sondern in einem dem Boden nahen Bereich über eine Rundung in den Boden übergehen. Durch eine kontinuierliche Vergrößerung des ersten Winkels wird das Aufsetzen der Profilschelle ebenso weiter verbessert. Auch hier muss der erste Winkel nicht zwangsläufig gleichmäßig sinken, sondern es sollte zumindest ein kontinuierlicher, stetiger Verlauf vorliegen.

Der Profilquerschnitt weist zwei zueinander gegenüberliegende Endkanten auf, deren Tangenten einen zweiten Winkel zueinander einschließen. Die vorangehend genannten Wandflächen des wannenförmigen Profilquerschnitts weisen folglich nach außen ragende Auskragungen auf. Der zweite Winkel beträgt etwa 90°, so dass zu jeder Seite des Profilquerschnitts ein Öffnungswinkel von etwa 45° vorliegt, in den ein Flansch eingeführt werden kann.

Der zweite Winkel ist dem ersten Übergangsabschnitt im Wesentlichen konstant. Der gesamte erste Übergangsabschnitt kann daher denselben komfortablen Öffnungswinkel bereitstellen.

In einer vorteilhaften Ausführungsform weist das Schellenband zwei gelenkig miteinander verbundene, gekrümmte Schellenabschnitte auf. Diese können jeweils mit einem Spannelement und einem ersten Übergangsabschnitt ausgestattet sein. Zur gelenkigen Verbindung können mehrere unterschiedliche Varianten genutzt werden, die den Gegenstand der Erfindung nicht beschränken sollen. Beispielsweise können die beiden Schellenabschnitte in Form von zwei Halbschalen realisiert sein, die über ein Scharnier oder ein ähnliches Gelenk miteinander verbunden sind. Alternativ dazu könnte auch lediglich ein elastisch ausgeführtes, bandartiges Element als Verbindung zwischen den beiden Schellenabschnitten fungieren, das aufgrund seiner Materialeigenschaften eine ausreichende Flexibilität zum Öffnen und Schließen der Profilschelle bereitstellt.

Besonders bevorzugt weisen die Schellenabschnitte jeweils einen von dem ersten Übergangsabschnitt abgewandten zweiten Übergangsabschnitt auf, wobei die beiden zweiten Übergangsabschnitte einen Gelenkabschnitt einschließen und wobei eine Höhe des Profilquerschnitts in dem zweiten Übergangsabschnitt in Richtung des Gelenkabschnitts kontinuierlich sinkt. Die zweiten Übergangsabschnitte im Bereich des Gelenks sind für die Verspannung von Flanschen nicht primär dimensionierend. Diese Ausgestaltung kann eine größtmögliche lichte Weite im Innern der Profilschelle bereitstellen, die zum Auffädeln auf einen Flansch genutzt werden kann. Eine geringe Profilhöhe sowie eine hohe Profilbreite kann trotz gleichbleibenden Außendurchmessers der Profilschelle eine verbesserte Montage erlauben.

Die Breite des Bodens könnte in dem zweiten Übergangsabschnitt konstant sein. Insbesondere ist die sich kontinuierlich verringernde Höhe hierfür maßgeblich und eine Bodenbreite kann konstant gehalten werden. Damit könnte die Profilschelle ausschließlich in einem Bereich um den Spannkopf herum mit einer ansteigenden Breite versehen, die in einen breiteren Spannkopf führt. Die Breite des Profilquerschnitts kann an allen anderen Stellen gleich bleiben, ohne auf die erfindungsgemäßen Vorteile verzichten zu müssen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schnittdarstellung einer Hälfte einer Profilschelle.
- Fig. 2a bis 2c: mehrere Schnittdarstellungen von Profilquerschnitten in einem ersten Übergangsabschnitt.
- Fig. 3a bis 3d: mehrere Schnittdarstellungen von Profilquerschnitten in einem zweiten Übergangsabschnitt.
- Fig. 4: eine Schnittdarstellung eines Profilquerschnitts in einem Schellenabschnitt.
- Fig. 5a bis 5c: Detaildarstellungen eines Spannelements.
- Fig. 6: eine dreidimensionale Darstellung des im Vergleich zum Stand der Technik geänderten Übergangs zu einem Spannelement.

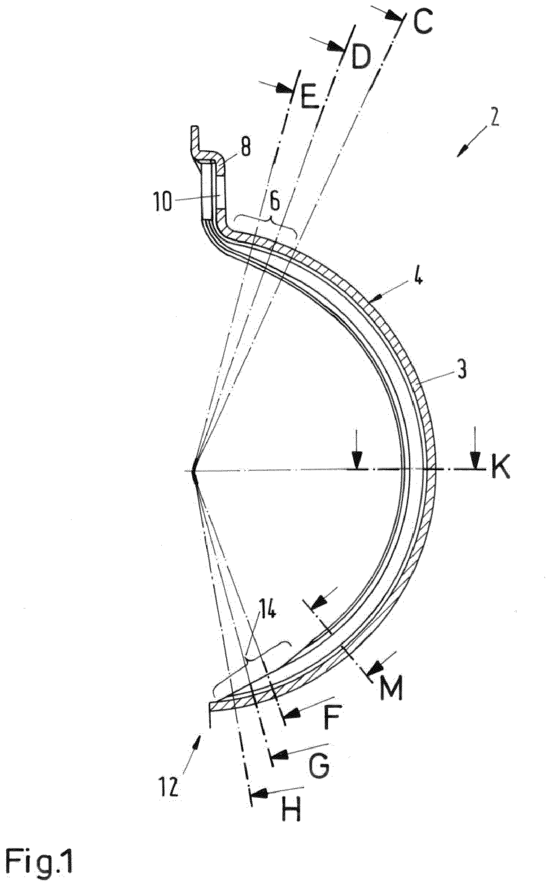

Fig. 1 zeigt eine Hälfte einer Profilschelle 2 zum Verbinden zweier rohrförmiger Körper, die beispielhaft an ihren zu verbindenden Enden jeweils einen radial nach außen ragenden Flansch aufweisen, in einer Schnittdarstellung. Eine weitere Hälfte führt zur Ergänzung zu einer vollständigen Profilschelle 2. Die auf die dargestellte Hälfte bezogenen Merkmale können bevorzugt auch in der anderen Hälfte vorhanden sein. In der nachfolgenden Beschreibung wird auf Merkmale eingegangen, die sich auf die gesamte Profilschelle 2 beziehen.

Die Profilschelle 2 weist ein Schellenband auf, das durch zwei Schellenabschnitte 4 gebildet ist, die jeweils einen ersten Übergangsabschnitt 6 aufweisen und ein daran anschließendes Spannelement 8. Selbstverständlich kann das Schellenband auch lediglich einteilig sein. Das Spannelement 8 ragt von dem Schellenabschnitt 4 radial nach außen und weist eine Durchgangsbohrung 10 auf. Eine Spannvorrichtung, etwa eine Schraube oder etwas ähnliches, kann durch die Durchgangsbohrungen 10 beider Spannelemente 8 geführt werden und dient der Verspannung der Profilschelle 2 in Umfangsrichtung. Die Spannelemente 8 können sich dadurch einander annähern und gegebenenfalls berühren. Ein Gelenkabschnitt 12 dient dazu, die beiden Schellenabschnitte 4 gelenkig miteinander zu verbinden, um einen variablen Abstand zwischen den Spannelementen 8 und damit die Verspannung zu ermöglichen.

Der erste Übergangsabschnitt 6 führt eine gleichmäßig gekrümmte Form des jeweiligen Schellenabschnitts 4 in eine aufgeweitete Form über, an der das Spannelement 8 angeschlossen ist. Eine Besonderheit des ersten Übergangsabschnitts 6 liegt in der vorteilhaften Formänderungsverlaufs des Profilquerschnitts, wie in den weiter nachfolgenden Figuren näher erläutert wird.

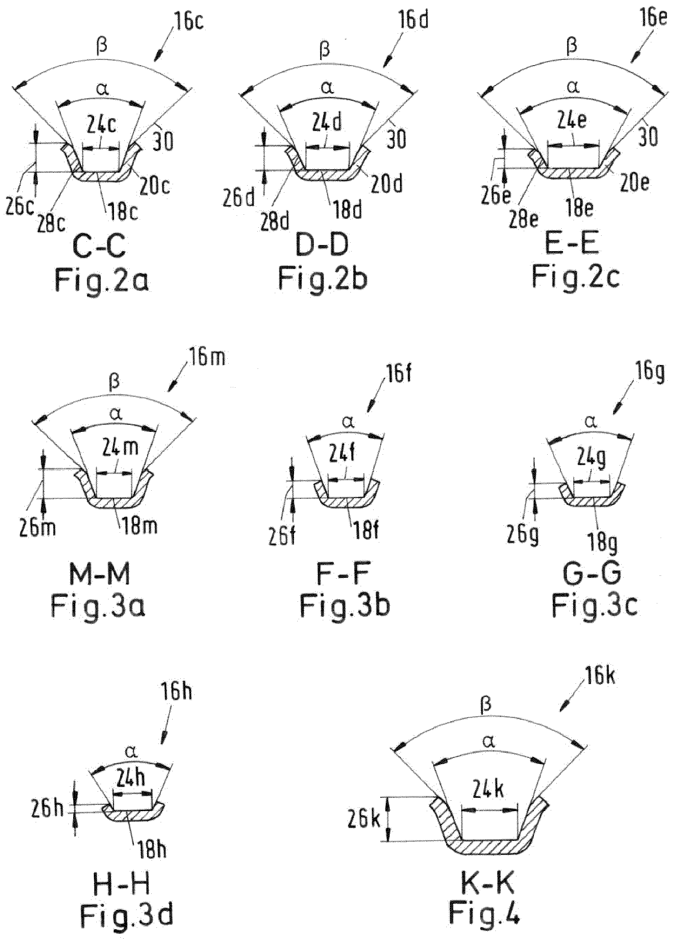

In Fig. 1 werden drei Profilschnittebenen C, D und E in dem ersten Übergangsabschnitt 6 markiert, die in den Fig. 2a bis 2c gezeigt sind. Aus Fig. 1 ist erkennbar, dass die Höhen der lokalen Profilquerschnitte in Richtung des Spannelements 8 sinken. Im Bereich angrenzend an den Gelenkabschnitt 12 ist ein zweiter Übergangsabschnitt 14 vorhanden. Dort werden ebenso drei Profilschnittebenen F, G und H markiert. In den zugehörigen lokalen Profilquerschnitten sinken die Höhen im Verlauf zu dem Gelenkabschnitt 12 hin.

Hierdurch kann stellenweise eine größtmögliche lichte Weite zwischen dem Gelenkabschnitt 12 und dem ersten Übergangsabschnitt 6 bereitgestellt werden, die das Aufsetzen einer entspannten Profilschelle 2 auf einen Flansch ermöglicht. Bevorzugt bleibt das vorangehend genannte Element zum Verspannen der Spannelemente 8 bereits in den entsprechenden Durchgangsbohrungen 10 angeordnet und locker verschraubt. Der Montageaufwand für die Profilschelle 2 ist daher deutlich geringer als bei bekannten Profilschellen.

Die Fig. 2a bis 2c zeigen einen Verlauf der Form lokaler Profilquerschnitte 16 in dem ersten Übergangsabschnitt 6 von dem Schellenabschnitt 4 in Richtung des Spannelement 8. Jeder der Profilquerschnitte 16 ist wannenförmig ausgebildet und weist einen Boden 18 und zwei den Boden 18 einschließende Schenkel 20 auf. Die Schenkel 20 besitzen einander gegenüberliegende Endkanten 22, die von dem Boden 18 abgewandt sind. Die zu den einzelnen Profilquerschnitten 16 gehörenden Bezugszeichen weisen zur Zuordnung der einzelnen Schnittebenen jeweils einen zusätzlichen Buchstaben auf, der mit der jeweiligen Schnittebene korreliert. Es sind folglich in Fig. 2a bis 2c Profilquerschnitte 16c, 16d und 16e gezeigt, die jeweils den Boden 18c, 18d und 18e aufweisen, etc.

Der in Fig. 2a gezeigte lokale Profilquerschnitt 16c in dem ersten Übergangsabschnitt 6 ist von dem Spannelement 8 am weitesten entfernt. Der dort angeordnete Boden 18c weist eine erste Breite 24c auf. Der in der Schnittebene D angeordnete Profilquerschnitt 16d weist einen Boden 18d mit einer Breite 24d auf, die größer als die Breite 24c des vorherigen Profilquerschnitts 16c ist. Der Profilquerschnitt 16e weist indes einen Boden 18e auf, der eine Breite 24e besitzt, die noch größer als die Breite 24d des vorherigen Profilquerschnitts 16d ist. Gleichzeitig weisen die drei Profilquerschnitte 16c, 16d und 16e lokale Höhen 26c, 26d und 26e auf, die in Richtung des Spannelement 8 kontinuierlich kleiner werden.

Wie in Fig. 2a bis 2c ferner ersichtlich ist, schließen geradlinige Abschnitte 28c, 28d und 28e der Schenkel 20 einen ersten Winkel α ein, der ebenso in Richtung des Spannelements 8 größer wird. Er steigt beispielhaft von etwa 38,5° auf etwa 54,5° an. In dem dazwischenliegenden Profilquerschnitt 16d kann der erste Winkel α beispielsweise 46,5° betragen. Tangenten 30 an den Endkanten 22, welche jeweils eine Auskragung aufweisen, schließen einen zweiten Winkel β zueinander ein. Dieser liegt exemplarisch bei konstant etwa 90° bei allen Profilquerschnitten 16c, 16d und 16e.

Durch diese Formänderung der lokalen Profilquerschnitte kann die Profilschelle 2 vereinfacht auf einen Flansch eines zu verbindenden rohrförmigen Körpers gesetzt werden. Des Weiteren kann insbesondere beim Tiefziehen oder anderen Umformprozessen ein harmonischerer Kraft- und Materialfluss erreicht werden, der das umzuformende Material schont und Risse, Brüche oder Dickensprünge des Materials verhindert.

In Fig. 3a bis 3d werden Formänderungen von Profilquerschnitten 16 im Bereich des zweiten Übergangsabschnitts 14 dargestellt. Hier ändert sich die Form ausgehend von einem normalen Profilquerschnitt 16m zu Profilquerschnitten 16f, 16g und 16h. Hier werden die Bezugszeichen analog zu den Fig. 2a bis 2c verwendet. Es ist ersichtlich, dass der erste Winkel α in Richtung des Gelenkabschnitts 12 ebenso vergrößert wird. Auch hier könnte er sich von 38,5° zu 54,5° ändern. Hierbei sind die Endkanten 22 der Profilquerschnitte 16f, 16g und 16h ohne eine Auskragung ausgebildet, sodass der in dem Profilquerschnitt 16m befindliche zweite Winkel β in dem zweiten Übergangsabschnitt 14 verschwindet. Desweiteren bleiben die Breiten 24f, 24g und 24h der Böden 18f, 18g und 18h konstant. In dem zweiten Übergangsabschnitt 14 kann eine starke Abflachung des Profilquerschnitts 16 toleriert werden, die zu der in Fig. 1 ersichtlichen hohen lichten Weite zwischen den beiden Übergangsabschnitten 6 und 14 führt.

Der Profilquerschnitt 16k, der in der Fig. 4 dargestellt ist, befindet sich etwa mittig in dem Schellenabschnitt 4. Er entspricht im Wesentlichen dem Profilquerschnitt 16m aus Fig. 3a und erstreckt sich über den gesamten Schellenabschnitt 4 zwischen den beiden Übergangsabschnitten 6 und 14. Der Profilquerschnitt 16m ist zum Umgreifen von Flanschen ausgestaltet.

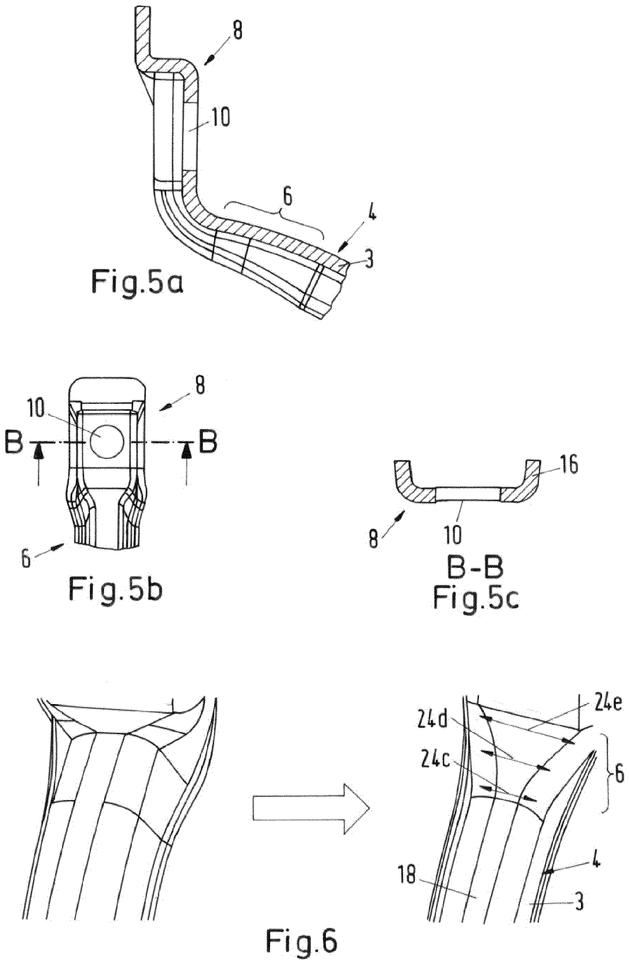

Fig. 5a, 5b und 5c zeigen das Spannelement 8 in zwei Detailansichten und einem Schnitt. Fig. 5a zeigt anschaulich die sinkende Höhe des Profilquerschnitts 16. In Fig. 5b ist indes die gleichmäßige Verbreiterung des Bodens 18 ersichtlich. Dies ist zudem in Fig. 6 als eine Gegenüberstellung zwischen einem herkömmlichen Anschlussbereich eines Spannelements (linker Teil der Fig. 6) und der erfindungsgemäßen Ausgestaltung (rechter Teil der Fig. 6) ersichtlich. In letzterem ist die vorteilhafte, gleichmäßige Erhöhung der Breite zum Optimieren des Material- und Kraftflusses erkennbar.

Die Erfindung ist nicht auf eine der vorbeschriebenen Ausführungsformen beschränkt, sondern in vielfältiger Weise abwandelbar und wird einzig durch die angehängten Ansprüche beschränkt.

### Bezugszeichenliste

- 2: Profilschelle
- 3: Schellenband
- 4: Schellenabschnitt
- 6: erster Übergangsabschnitt
- 8: Spannelement
- 10: Durchgangsbohrung
- 12: Gelenkabschnitt
- 14: zweiter Übergangsabschnitt
- 16: Profilquerschnitt
- 18: Boden
- 20: Schenkel
- 22: Endkante
- 24: Breite des Bodens
- 26: Höhe des Profilquerschnitts
- 28: geradliniger Abschnitt
- 30: Tangente

- α: erster Winkel
- β: zweiter Winkel

## Patentansprüche

1. Profilschelle (2) zum Verbinden zweier rohrförmiger Körper, wobei die Profilschelle (2) ein Schellenband (3) mit einem radial innenseitig offenen Profilquerschnitt (16) aufweist, wobei das Schellenband (3) an mindestens einem Ende einen ersten Übergangsabschnitt (6) und ein daran anschließendes, radial vorspringendes Spannelement (8) aufweist, und wobei das Spannelement (8) zum Verspannen der Profilschelle (2) in Umfangsrichtung spannbar ist, wobei die Breite (24) eines Bodens (18) des Profilquerschnitts (16) von dem Spannelement (8) abgewandten Ende des ersten Übergangsabschnitts (6) zu dem Spannelement (8) hin gleichmäßig anwächst, wobei der Profilquerschnitt (16) zwei einander gegenüberliegende Endkanten (22) aufweist, deren Tangenten (30) einen zweiten Winkel (β) zueinander einschließen, **dadurch gekennzeichnet, dass** der zweite Winkel (β) etwa 90° beträgt, so dass zu jeder Seite des Profilquerschnitts ein Öffnungswinkel von etwa 45° vorliegt, in den ein Flansch eingeführt werden kann, wobei der zweite Winkel (β) in dem ersten Übergangsabschnitt (6) im Wesentlichen konstant ist.

2. Profilschelle (2) nach Anspruch 1, **dadurch gekennzeichnet, dass** eine Höhe (26) des Profilquerschnitts (16) von dem dem Spannelement (8) abgewandten Ende zu dem Spannelement (8) hin kontinuierlich sinkt.

3. Profilschelle (2) nach Anspruch 1 oder 2, **dadurch gekennzeichnet, dass** der Profilquerschnitt (16) wannenförmig ist und zwei den Boden (18) einschließende Schenkel (20) aufweist, die jeweils einen dem Boden (18) zugewandten geradlinigen Abschnitt (28) aufweisen, wobei die geradlinigen Abschnitte (28) der beiden Schenkel (20) einen ersten Winkel (α) zueinander einschließen, der sich von dem dem Spannelement (8) abgewandten Ende zu dem Spannelement (8) hin kontinuierlich vergrößert.

4. Profilschelle (2) nach einem der vorhergehenden Ansprüche, **dadurch gekennzeichnet, dass** das Schellenband (3) zwei gelenkig miteinander verbundene, gekrümmte Schellenabschnitte (4) aufweist.

5. Profilschelle (2) nach Anspruch 4, **dadurch gekennzeichnet, dass** die Schellenabschnitte (4) jeweils einen von dem ersten Übergangsabschnitt (6) abgewandten zweiten Übergangsabschnitt (14) aufweisen, wobei die beiden zweiten Übergangsabschnitte (14) einen Gelenkabschnitt (12) einschließen und wobei eine Höhe (26) des Profilquerschnitts (16) in dem zweiten Übergangsabschnitt (14) in Richtung des Gelenkabschnitts (12) kontinuierlich sinkt.

6. Profilschelle (2) nach Anspruch 5, **dadurch gekennzeichnet, dass** die Breite (24) des Bodens (18) in dem zweiten Übergangsabschnitt (14) konstant ist.

## Claims

1. Profile clamp (2) for connecting two tubular bodies, wherein the profile clamp (2) has a clamp band (3) having a profile cross section (16) open radially on the inside, wherein the clamp band (3) has a first transition section (6) at at least one end and an adjoining, radially projecting clamping element (8), and wherein the clamping element (8) can be clamped in the circumferential direction in order to tighten the profile clamp (2), wherein the width (24) of a base (18) of the profile cross section (16) increases uniformly towards the clamping element (8) from the end of the first transition section (6) remote from the clamping element (8), wherein the profile cross section (16) has two opposite end edges (22), the tangents (30) of which enclose a second angle (β) with respect to one another, **characterized in that** the second angle (β) is approximately 90°, resulting in an opening angle of approximately 45°, into which a flange can be inserted, on each side of the profile cross section, wherein the second angle (β) is substantially constant in the first transition section (6).

2. Profile clamp (2) according to Claim 1, **characterized in that** a height (26) of the profile cross section (16) decreases continuously towards the clamping element (8) from the end remote from the clamping element (8).

3. Profile clamp (2) according to Claim 1 or 2, **characterized in that** the profile cross section (16) is trough-shaped and has two legs (20), which enclose the base (18) and each have a straight section (28) adjacent to the base (18), wherein the straight sections (28) of the two legs (20) enclose a first angle (α) with respect to one another which increases continuously towards the clamping element (8) from the end remote from the clamping element (8) .

4. Profile clamp (2) according to any of the preceding claims, **characterized in that** the clamp band (3) has two curved clamp sections (4), which are connected to one another in an articulated manner.

5. Profile clamp (2) according to Claim 4, **characterized in that** the clamp sections (4) each have a second transition section (14) remote from the first transition section (6), wherein the two second transition sections (14) enclose a joint section (12), and wherein a height (26) of the profile cross section (16) in the second transition section (14) decreases continuously in the direction of the joint section (12).

6. Profile clamp (2) according to Claim 5, **characterized in that** the width (24) of the base (18) is constant in the second transition section (14) .

## Revendications

1. Collier de serrage profilé (2) pour relier deux corps tubulaires, le collier de serrage profilé (2) présentant une bande de collier de serrage (3) avec une section transversale profilée (16) ouverte radialement vers l'intérieur, la bande de collier de serrage (3) présentant à au moins une extrémité une première section de transition (6) et un élément de serrage (8) faisant saillie radialement, qui s'y raccorde, et l'élément de serrage (8) pouvant être serré dans la direction périphérique pour serrer le collier de serrage profilé (2), la largeur (24) d'un fond (18) de la section transversale profilée (16) augmentant régulièrement de l'extrémité de la première section de transition (6) détournée de l'élément de serrage (8) vers l'élément de serrage (8), la section transversale profilée (16) présentant deux bords d'extrémité (22) opposés l'un à l'autre, dont les tangentes (30) forment un deuxième angle (β) l'une par rapport à l'autre, **caractérisé en ce que** le deuxième angle (β) est d'environ 90°, de telle sorte qu'il existe de chaque côté de la section transversale profilée un angle d'ouverture d'environ 45°, dans lequel une bride peut être introduite, le deuxième angle (β) étant essentiellement constant dans la première section de transition (6).

2. Collier de serrage profilé (2) selon la revendication 1, **caractérisé en ce qu'**une hauteur (26) de la section transversale profilée (16) diminue continuellement de l'extrémité détournée de l'élément de serrage (8) vers l'élément de serrage (8).

3. Collier de serrage profilé (2) selon la revendication 1 ou 2, **caractérisé en ce que** la section transversale profilée (16) est en forme de cuvette et présente deux branches (20) entourant le fond (18), qui présentent chacune une section rectiligne (28) tournée vers le fond (18), les sections rectilignes (28) des deux branches (20) formant entre elles un premier angle (α) qui s'agrandit continuellement de l'extrémité détournée de l'élément de serrage (8) vers l'élément de serrage (8) .

4. Collier de serrage profilé (2) selon l'une quelconque des revendications précédentes, **caractérisé en ce que** la bande de collier de serrage (3) présente deux sections de collier de serrage (4) courbées, reliées l'une à l'autre de manière articulée.

5. Collier de serrage profilé (2) selon la revendication 4, **caractérisé en ce que** les sections de collier de serrage (4) présentent chacune une deuxième section de transition (14) détournée de la première section de transition (6), les deux deuxièmes sections de transition (14) entourant une section d'articulation (12) et une hauteur (26) de la section transversale profilée (16) dans la deuxième section de transition (14) diminuant continuellement en direction de la section d'articulation (12).

6. Collier de serrage profilé (2) selon la revendication 5, **caractérisé en ce que** la largeur (24) du fond (18) dans la deuxième section de transition (14) est constante.
